# FASCICULE DE BREVET EUROPEEN

(11) **EP 3 861 313 B1**
(45) Date de publication et mention de la délivrance du brevet: **27.07.2022**
(21) Numéro de dépôt: 19795296.3
(22) Date de dépôt: 01.10.2019
(51) Int. Cl.: G01M 1/34, G01M 1/24, G01B 21/22, F01D 5/02

(54) **PROCÉDÉ D'ÉQUILIBRAGE DU BALOURD D'UN ENSEMBLE ARBRE-ROUE**
VERFAHREN ZUM AUSWUCHTEN DER UNWUCHT EINER WELLE/RAD-ANORDNUNG
METHOD FOR BALANCING THE OUT-OF-BALANCE OF A SHAFT/WHEEL ASSEMBLY

(30) Priorité: 02.10.2018 FR 1859134
(43) Date de publication de la demande: 11.08.2021
(73) Titulaire: Datatechnic, 88390 Uxegney (FR)
(72) Inventeur: SILLON, Christophe, 88500 Mirecourt (FR)
(74) Mandataire: Jacobacci Coralis Harle
(86) Numéro de dépôt international: PCT/FR2019/052323
(87) Numéro de publication internationale: WO 2020/070439

(56) Documents cités:
- DE-T5-112016 001 288
- US-A1- 2016 363 134

## Description

### DOMAINE TECHNIQUE AUQUEL SE RAPPORTE L'INVENTION

La présente invention concerne un procédé d'équilibrage du balourd d'un ensemble arbre-roue, comprenant une roue à aubes maintenue à l'extrémité d'un arbre mécanique. En particulier, elle concerne un procédé d'équilibrage du balourd d'une pièce de turbocompresseur pour moteur thermique, comprenant une roue de turbine soudée à l'extrémité d'un arbre mécanique. La présente invention porte également sur un poste d'équilibrage automatisé, apte à mettre en œuvre le procédé d'équilibrage.

### ARRIERE-PLAN TECHNOLOGIQUE

De façon connue, un turbocompresseur permet d'augmenter le rendement d'un moteur thermique. Pour cela, le turbocompresseur comprend une roue de turbine maintenue à une extrémité d'un arbre mécanique et une roue de compresseur maintenue à une autre extrémité dudit arbre. La roue de turbine est placée dans le flux des gaz d'échappement du moteur, afin d'entrainer la rotation de la roue de compresseur par l'intermédiaire de l'arbre mécanique. La roue de compresseur est quant à elle placée dans le conduit d'admission du moteur, pour comprimer les gaz d'admission avant leur injection dans le moteur. La vitesse de rotation du turbocompresseur peut alors atteindre des vitesses très élevées, de l'ordre de 250 000 tours par minute. De ce fait, un mauvais équilibre entre l'arbre mécanique et la roue de turbine est susceptible de générer des vibrations, pouvant provoquer une nuisance sonore sous la forme d'un sifflement ainsi qu'une usure prématurée du turbocompresseur.

Habituellement, les roues de turbines sont des pièces de fonderie, dont la surface brute ne permet pas leur soudage de façon très précise à l'extrémité d'un arbre mécanique. De plus, lors du soudage, la répartition du métal d'apport n'est pas non plus très bien contrôlée sur la pièce soudée. L'axe de rotation de l'arbre mécanique se trouve ainsi plus ou moins décalé par rapport au centre d'inertie de la pièce soudée.

Pour cette raison, il est nécessaire de contrôler la valeur de ce décalage ou déséquilibre nommé balourd pour chaque pièce soudée, afin de s'assurer que cette valeur soit bien comprise dans les plages de tolérance prédéfinies par les constructeurs de turbocompresseurs. Dans le cas inverse, une opération d'équilibrage est mise en œuvre. Cette opération consiste à retirer une légère quantité de matière sur la roue de turbine, afin de rapprocher l'axe d'inertie de la pièce soudée, de l'axe de rotation de l'arbre mécanique. Le retrait de matière s'effectue de façon automatisée, à l'aide d'un gabarit numérique de la pièce, permettant de modéliser en fonction de la valeur du balourd la quantité de matière à retirer, la forme du retrait ainsi que sa localisation sur la roue de turbine. Ces informations sont par la suite transmises à un bras robotisé, afin de lui permettre d'effectuer ce retrait à l'aide d'un disque de meulage.

Les documents US 2016/363134 et DE 11 2016 001288 divulguent diverses méthodes d'équilibrage des roues de turbine.

Or, la surface brute des roues de turbine ne permet pas de contrôler très précisément leur angle d'inclinaison lors de leur soudage, par rapport à l'axe de rotation de l'arbre mécanique. Cette imprécision se traduit par un décalage de quelques dixièmes de millimètres de la surface de la roue de turbine, par rapport à sa position théorique lorsqu'elle est maintenue par une base. Autrement dit, le gabarit numérique ne prend pas en compte l'existence de ce phénomène appelé battement, relatif à la variation de l'angle d'inclinaison de la roue de turbine par rapport à l'arbre mécanique. En fonction de l'amplitude du battement, la quantité de matière réellement retirée par le bras robotisé varie plus ou moins par rapport à celle désirée. Par conséquent, le résultat d'un équilibrage varie énormément d'une pièce soudée à une autre selon la valeur de son battement. On procède à un contrôle de la valeur du balourd après chaque équilibrage. En cas d'équilibrage insuffisant, l'opération d'équilibrage est reproduite jusqu'à ce que la valeur du balourd de la pièce soudée soit conforme aux attentes. Ces opérations d'équilibrages répétées ont pour inconvénient de ralentir la cadence de production desdites pièces, et d'en une moindre mesure, fragiliser leur structure.

La présente invention vise à résoudre ce problème, en proposant un procédé d'équilibrage plus précis, du balourd d'un ensemble arbre-roue, comprenant une roue à aubes maintenue à l'extrémité d'un arbre mécanique.

### OBJET DE L'INVENTION

Pour cela, la présente invention propose un procédé d'équilibrage du balourd d'un ensemble arbre-roue selon la revendication 1.

En d'autres termes, le procédé d'équilibrage proposé par l'invention prend en compte la position réelle de la surface de la roue à aubes, avant d'effectuer un retrait de matière à sa surface. En mesurant la position de quelques points à la surface de la roue à aubes, par rapport à un axe longitudinal de l'arbre mécanique, avant la mise en œuvre de l'étape c), l'invention permet de prendre en compte l'inclinaison ainsi que la position réelle de la roue à aubes par rapport à l'arbre mécanique sur lequel la roue à aubes est soudée. De ce fait, l'invention permet de maîtriser nettement mieux la localisation ainsi que la quantité de matière réellement retirée à la surface de la roue à aubes. Autrement dit, on réduit de façon significative la différence entre, la quantité de matière retirée souhaitée et la quantité de matière réellement retirée, dû à un phénomène de battement et/ou de décalage entre la roue à aubes et l'arbre mécanique, en raison d'une certaine imprécision lors de leur assemblage. De ce fait, l'équilibrage d'un ensemble arbre-roue est réalisé de façon nettement plus précise par rapport à l'état de la technique. Cela permet avantageusement de réduire le nombre de cycles d'équilibrage, d'une roue de turbine soudée à l'extrémité d'un arbre mécanique, pour répondre aux attentes des constructeurs de turbocompresseurs.

Il est à noter que l'étape b) peut être réalisée en même temps, avant ou après l'étape a), et l'étape a) consiste à mesurer la distance entre, le centre d'inertie de l'ensemble arbre-roue et l'axe de rotation de l'arbre mécanique.

Selon une autre caractéristique de l'invention, les positions des zones cibles sont mesurées par rapport à la position de l'arbre mécanique. Ce mode de réalisation est particulièrement avantageux lorsque l'ensemble arbre-roue est déplacé entre les étapes b) et c). Selon une variante de réalisation, les positions des zones cibles sont mesurées par rapport à un moyen de maintien de l'arbre mécanique.

Selon une autre caractéristique de l'invention, les zones cibles sont présentes sur une ou plusieurs faces de la roue à aubes, s'étendant radialement ou sensiblement radialement par rapport à l'arbre mécanique. On privilégie les surfaces s'étendant radialement de l'arbre mécanique, de sorte à obtenir une information plus précise sur la valeur de l'amplitude du phénomène de battement.

Selon une autre caractéristique de l'invention, les zones cibles sont présentes sur une même face de la roue à aubes. Ce mode de réalisation permet avantageusement de sonder plusieurs points d'une même face, afin de détecter d'éventuels défauts de surface liés par exemple, au procédé de fabrication et/ou de manutention de la roue à aubes. En d'autres termes, l'invention permet notamment de détecter et de prendre en compte des défauts liés au moule utilisé pour réaliser la roue à aubes.

Selon une autre caractéristique de l'invention, les zones cibles sont éloignées de l'arbre mécanique selon une distance identique ou sensiblement identique. Ce mode de réalisation est particulièrement avantageux pour mesurer la valeur du battement entre la roue à aubes et l'arbre mécanique.

Selon une autre caractéristique de l'invention, les zones cibles sont éloignées de l'arbre mécanique d'une distance comprise entre 0,7 et 0,99 fois la valeur du plus grand rayon de la roue à aubes. Il est à noter que le plus grand rayon définit le plus grand cercle inscrit ou sensiblement inscrit dans la roue à aubes. Autrement dit, lorsque la roue comporte des ajours entre ses aubes, le plus grand rayon de la roue à aubes s'arrête au niveau d'une palmure délimitant le plus profond ajour. Ce mode de réalisation permet une mesure plus précise de la valeur du battement entre la roue à aubes et l'arbre mécanique. Selon une autre caractéristique de l'invention, les mesures de position sont réalisées au niveau d'au moins quatre zones cibles.

Selon une autre caractéristique de l'invention, les zones cibles sont écartées d'une distance angulaire identique ou sensiblement identique par rapport à l'arbre mécanique. Ce mode de réalisation permet une mesure globale de la valeur du battement de la roue à aubes. Selon une variante de réalisation, une partie des zones cibles peuvent être regroupées au niveau du retrait de matière que l'on souhaite réaliser. Ce mode de réalisation permet un calcul plus précis de la matière devant être retirée pour corriger la valeur du balourd de la pièce.

Selon une autre caractéristique de l'invention, le retrait de matière est réalisé dans ou à proximité d'une zone cible. Ce mode de réalisation permet un retrait d'une quantité de matière plus précis.

Selon une autre caractéristique de l'invention, les positions des zones cibles sont mesurées à l'aide d'un outil appliqué contre la surface de la roue à aubes. De préférence, l'outil est un moyen de meulage de la roue à aubes, actif lors de la mesure des positions des zones cibles. Ce mode de réalisation permet avantageusement une détection plus précise de la position des zones cibles, lorsque le moyen de meulage est légèrement excentré par rapport à son axe de rotation. Selon un autre avantage, on réduit le temps d'équilibrage nécessaire, en supprimant une étape d'activation du moyen de meulage lors du procédé.

Selon une autre caractéristique de l'invention, les positions des zones cibles sont mesurées à l'aide de moyens de mesure sans contact physique. À titre d'exemples, les moyens de mesure sans contact physique peuvent comprendre des moyens de détection optique et/ou des moyens de détection électromagnétique. De préférence, les moyens de mesure sans contact sont présents au niveau d'un poste de mesure de la valeur du balourd de l'ensemble arbre-roue.

Selon une autre caractéristique de l'invention, préalablement à l'étape de retrait et à partir des mesures de positions des zones cibles, le procédé met en œuvre une étape de calcul de l'inclinaison et/ou de la position de la roue à aubes par rapport à l'arbre mécanique, afin de définir la forme ainsi que la profondeur d'une zone de retrait de matière à réaliser à la surface de la roue à aubes.

Selon une autre caractéristique de l'invention, le retrait de matière à la surface de la roue à aubes est réalisé à l'aide d'un outil de meulage, prenant en compte la position des zones cibles lors de ses déplacements à proximité de la surface de la roue à aubes. En d'autres termes, l'invention propose de modifier la course programmée de l'outil de meulage, en fonction des variations de courbure calculées à partir des positions des zones cibles.

Bien entendu, les différentes caractéristiques, variantes et formes de réalisation mentionnées ci-dessus peuvent être associées les unes avec les autres selon diverses combinaisons, dans la mesure où elles ne sont pas incompatibles ou exclusives les unes des autres.

L'invention propose également un poste d'équilibrage automatisé du balourd d'un ensemble arbre-roue selon la revendication 12.

Selon un autre mode de réalisation du poste d'équilibrage, les moyens de mesure de la position de plusieurs zones cibles et les moyens de retrait sont présents au niveau d'un même poste. De préférence, les moyens de mesure de la position de plusieurs zones cibles comprennent un outil apte à venir en contact de la roue à aubes pour mesurer la position des zones cibles. Selon un mode de réalisation particulier, l'outil comporte un moyen de meulage, de préférence actif lors des mesures de position des zones cibles.

Selon un autre mode de réalisation, les moyens de retraits sont du type meulage, fraisage ou équivalent.

Selon une variante de réalisation du poste d'équilibrage, les moyens de mesure de la valeur du balourd et les moyens de mesure de la position des zones cibles sont présents au niveau d'un même poste. De préférence, les moyens de mesure sont du type sans contact. À titre d'exemples, les moyens de mesure sans contact peuvent comprendre des moyens de détection optique et/ou des moyens de détection électromagnétique.

### DESCRIPTION DES FIGURES

La description qui va suivre en regard des dessins annexés suivants, donnés à titre d'exemples non limitatifs, permettra de mieux comprendre en quoi consiste l'invention et comment elle peut être réalisée :
- la figure 1 représente une vue schématique d'une coupe longitudinale d'un ensemble arbre-roue, comprenant une roue à aubes soudée à l'extrémité d'un arbre mécanique ;
- la figure 2 représente une vue schématique du dessous de l'ensemble arbre-roue illustré par la figure 1, comportant plusieurs zones cibles présentes au niveau de la face arrière de la roue à aubes ;
- la figure 3 représente une modélisation du battement de la face arrière de la roue à aubes, calculée à partir de la mesure des positions des zones cibles illustrées sur la figure 2 ;
- la figure 4 représente une vue schématique du dessous de l'ensemble arbre-roue illustré par la figure 1, comportant une zone de retrait de matière réalisée conformément à un procédé d'équilibrage selon l'invention ;
- la figure 5 représente une vue schématique d'une coupe longitudinale d'un premier mode de réalisation d'un poste d'équilibrage automatisé selon l'invention ;
- la figure 6 représente une vue schématique d'une coupe longitudinale d'un deuxième mode de réalisation d'un poste d'équilibrage automatisé selon l'invention.

### DESCRIPTION DETAILLEE D'UN EXEMPLE DE RÉALISATION

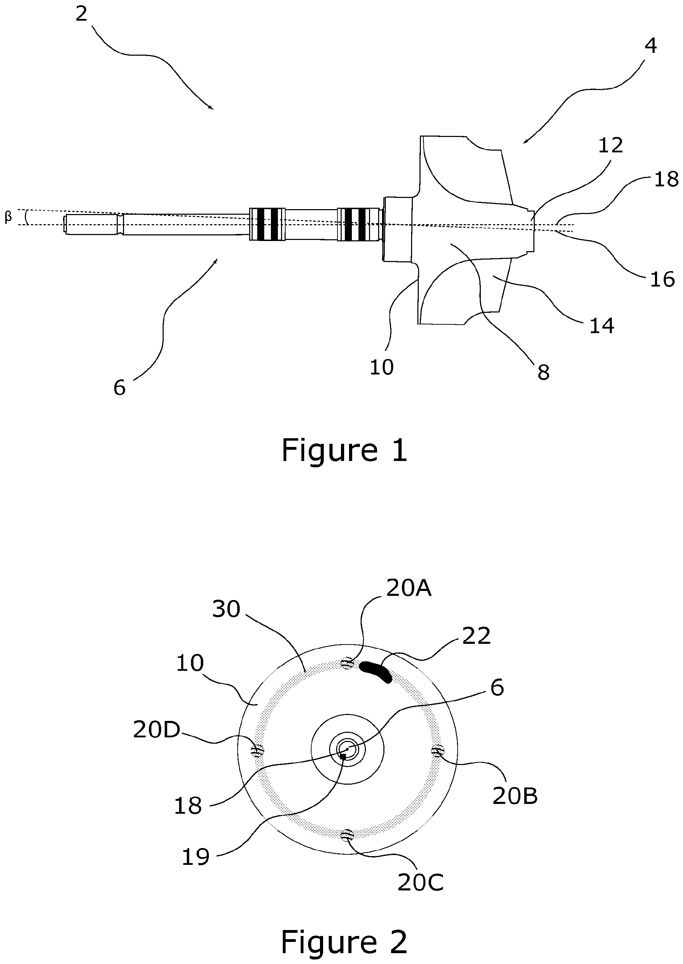

Selon l'invention, on entend par un ensemble arbre-roue 2, une roue à aubes 4 maintenue à l'extrémité d'un arbre mécanique 6, comme illustré par la figure 1. De façon connue, une roue à aubes comprend un moyeu 8 de forme conique ou sensiblement conique, s'étendant entre une face arrière 10 et un nez 12. La roue à aubes comporte une pluralité d'ailettes 14 s'étendant radialement du moyeu 8. Les ailettes sont réparties à intervalles réguliers autour dudit moyeu, de sorte à permettre à un flux d'air d'entrainer le pivotement de la roue à aubes 4 autour d'un axe de rotation 16, passant par le centre de la face arrière 10 et le centre du nez 12 du moyeu.

La roue à aubes 4 est habituellement une pièce de fonderie dont la surface brute empêche un soudage précis de cette dernière sur une extrémité de l'arbre mécanique 6. De ce fait, l'axe de rotation 16 de la roue à aubes et l'axe de rotation 18 de l'arbre mécanique 6, sont légèrement décalés l'un par rapport à l'autre et inclinés d'un angle β comme illustré sur la figure 1. Le centre d'inertie 19 de la pièce soudée est ainsi distant de l'axe de rotation 18 de l'arbre mécanique 6, voir figure 2, ce qui génère des vibrations mécaniques et une usure prématurée de l'ensemble arbre-roue 2 lorsqu'il est utilisé comme turbine de turbocompresseur. La présente invention propose un procédé d'équilibrage plus précis du balourd de l'ensemble arbre-roue 2, par rapport à l'état de la technique, afin de remédier à ces inconvénients.

Selon un premier exemple de réalisation, un procédé d'équilibrage conforme à l'invention met en œuvre une première étape de mesure de la valeur du balourd de l'ensemble arbre-roue 2, par exemple la mesure de la valeur du balourd statique de l'ensemble arbre-roue. De façon connue, on mesure le décalage entre le centre d'inertie 19 de l'ensemble arbre-roue 2 et l'axe de rotation 18 de l'arbre mécanique 6. Dans le cas où la valeur mesurée n'est pas comprise dans une plage de tolérance prédéfinie, le procédé d'équilibrage met en œuvre les étapes ci-dessous.

Selon une deuxième étape, on mesure la position de quatre zones cibles 20A, 20B, 20C et 20D distinctes et présentes sur la surface de la roue à aubes 4 comme illustré sur la figure 2. Plus précisément, les quatre zones cibles sont présentes sur la face arrière 10 du moyeu 8. Chaque zone cible est éloignée de l'arbre mécanique 6 d'une même distance, ou sensiblement du même distance comprise entre 0,7 et 0,99 fois le rayon R de la face arrière 10, de préférence de l'ordre de 0,8 fois le rayon R de la face arrière 10. Il est à noter que le rayon R correspond selon l'invention au rayon d'un cercle inscrit ou sensiblement inscrit dans la face arrière et délimitant cette dernière. Selon une variante, lorsque la roue à aubes comporte des ajours entre ses aubes, le rayon R s'arrête au niveau d'une palmure délimitant l'ajour le plus profond au niveau de la face arrière 10. De préférence, la position des quatre zones cibles est mesurée par rapport à l'axe longitudinal 18 de l'arbre mécanique 6.

Selon une variante de réalisation, la position des quatre zones cibles peut également être mesurées par rapport à un même référentiel, distinct de l'ensemble arbre-roue, par exemple par rapport à un référentiel lié à un dispositif, apte à faire pivoter l'ensemble arbre-roue par rapport à l'axe de rotation 18 de l'arbre mécanique 6.

Les zones cibles 20A, 20B, 20C et 20D sont écartées d'une distance angulaire α identique ou sensiblement identique, par rapport à l'axe de rotation 18 de l'arbre mécanique 6. Selon le présent exemple, la valeur de cette distance angulaire α est de l'ordre de 90°. Il est à noter que l'invention n'est pas limitée au nombre de zones cibles, ni à la valeur de la distance angulaire mentionnés ci-dessus. Par exemple, une partie des zones cibles peut être localisée au niveau de la zone où on souhaite effectuer un retrait de matière.

Selon une troisième étape, à partir des positions mesurées des zones cibles 20A, 20B, 20C et 20D, on calcule un angle d'inclinaison de la face arrière 10 du moyeu, par rapport à l'axe de rotation 18 de l'arbre mécanique 6. Par la suite, la valeur de cet angle d'inclinaison est prise en compte dans le calcul de correction du balourd de l'ensemble arbre-roue 2, pour déterminer la quantité de matière à retirer, sa localisation ainsi que la forme du retrait de matière. La valeur de cet angle d'inclinaison peut par exemple être une variable d'ajustement d'un gabarit numérique, utilisé de façon connue pour calculer et identifier la zone de retrait de matière à effectuer. De préférence, la zone de retrait de matière est calculée au niveau de la face arrière 10, au plus près d'une zone cible.

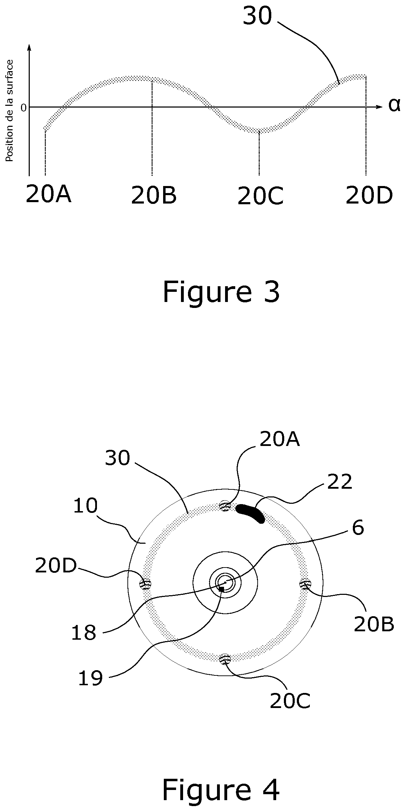

Selon une quatrième étape illustrée par la figure 4, on pratique un retrait de matière 22 sur la face arrière 10 du moyeu 8, conformément aux calculs réalisés précédemment, à l'aide d'un outil de meulage. Ce mode de réalisation offre l'avantage de calculer une forme ainsi qu'une localisation d'un retrait de matière, de façon beaucoup plus précise par rapport à l'état de la technique. En effet, en connaissant la valeur de l'angle d'inclinaison de la face arrière 10 par rapport à l'arbre mécanique 6, on maîtrise plus précisément la localisation ainsi que la quantité de matière retirée de ladite face arrière.

Le procédé d'équilibrage peut comporter plusieurs variantes de réalisation décrites ci-après. Il est à noter que ces variantes ne visent pas à limiter la portée de la protection de l'invention, mais au contraire à montrer une partie des nombreuses variantes possibles de réalisation de l'invention.

Selon une première variante de l'exemple de réalisation décrit ci-dessus, lors de la troisième étape d'identification de la zone de retrait de matière 22, on calcule à partir des positions des zones cibles 20A, 20B, 20C et 20D, une forme et une localisation de la zone de retrait de matière 22 sur la roue à aubes de sorte que son épaisseur au niveau de ladite zone soit égale ou supérieure à une valeur seuil. La valeur seuil est choisie de manière à préserver une certaine résistance mécanique à la roue à aubes 4. Autrement dit, le procédé selon l'invention permet d'éviter un retrait de matière trop important au niveau de la face arrière 10, susceptible de fragiliser la résistance mécanique de la roue à aubes, due à une incertitude concernant la position réelle de la surface de la roue à aubes lors de l'opération de meulage. De préférence, la valeur seuil est choisie de sorte que l'épaisseur de la roue à aubes au niveau de la zone de retrait, selon une direction sensiblement parallèle à son axe de rotation 16, ne soit pas inférieure ou égale à 0,5 mm, ou de préférence inférieure ou égale à 0,2 mm.

Selon une deuxième variante du premier exemple de réalisation décrit ci-dessus, lors de la troisième étape d'identification de la zone de retrait de matière, les positions mesurées des zones cibles 20A, 20B, 20C et 20D servent à modéliser la courbure d'un pourtour 30 de la face arrière 10 illustré par la figure 3. Autrement dit, le nombre et les positions des zones cibles sont choisis de manière à pouvoir modéliser la courbure ou le battement d'au moins une partie de la face arrière 10. Il est à noter que le pourtour peut être partiel et comporter uniquement les parties de la face arrière 10 susceptibles de comporter la zone de retrait de matière. En parallèle, de façon connue, le procédé identifie à partir d'un gabarit numérique, une zone de retrait de matière sur la roue à aubes pour réduire la valeur du balourd de l'ensemble arbre-roue 2. Autrement dit, la localisation ainsi que la forme de la zone de retrait de matière 22 sont calculées indépendamment des mesures des positions des zones cibles. Lors de la quatrième étape du procédé illustrée par la figure 4, un outil de meulage est utilisé pour réaliser le retrait de matière 22. De façon connue, l'outil de meulage est déplacé par l'intermédiaire d'un bras robotisé, dont la course est programmée en fonction de la position et de la forme de la zone de retrait de matière souhaitées. Selon l'invention, la course de l'outil de meulage est modifiée de manière à prendre en compte la courbure de la face arrière 10, calculé à partir des positions des zones cibles 20. En d'autres termes, les coordonnées de la zone de retrait de matière 22, transmises au bras robotisé, sont modifiées de manière à prendre en compte la position réelle de la surface de la face arrière 10. Ce mode de réalisation permet avantageusement de ne pas modifier le gabarit numérique, ni de modifier le calcul de la forme et de la localisation de la zone de retrait de matière 22 habituellement employés par l'état de la technique. Cette variante de réalisation peut ainsi être adaptée rapidement et aisément sur les procédés d'équilibrage existants.

Selon une troisième variante du premier exemple de réalisation décrit ci-dessus, lors de la deuxième étape, les zones cibles 20 sont choisies sur une face avant du moyeu 8, opposée à sa face arrière 10 (voir figure 1). La face avant 24 s'étend également radialement ou sensiblement radialement par rapport au moyeu 8. La face avant 24 peut également délimiter les aubes 26. Dans ce cas, le retrait de matière réalisé lors de la quatrième étape est de préférence effectué au niveau de la face avant 24, afin de permettre un équilibrage plus précis.

Selon une quatrième variante du premier exemple de réalisation décrit ci-dessus, lors de la deuxième étape, on privilégie un nombre supérieur de zones cibles, de préférence compris entre 4 et 20, lorsque la surface de la roue à aubes comporte des irrégularités, dues par exemple à son procédé de fabrication et/ou à des chocs lors de sa manipulation. Ainsi, de façon avantageuse, le procédé d'équilibrage peut prendre en compte ce type de défauts, afin de corriger plus précisément la valeur du balourd de l'ensemble arbre-roue 2. Les zones cibles ne sont pas forcément réparties de façon uniforme au niveau de la surface de la roue à aubes.

Selon une cinquième variante du premier exemple de réalisation décrit ci-dessus, lors de la deuxième étape, les positions des zones cibles sont mesurées par rapport à un point de référence présent sur l'ensemble arbre-roue 2. À titre d'exemple non limitatif, ce point de référence peut être une particularité physique de l'ensemble arbre-roue, comme une extrémité libre de l'arbre mécanique 6 ou une ailette de la roue à aubes 4. Éventuellement, le point de référence peut être une marque de couleur apposée sur la roue à aubes. Ce mode de réalisation est particulièrement avantageux lorsque l'ensemble arbre-roue 2 doit être déplacé pour réaliser la quatrième étape de meulage.

Selon une sixième variante du premier exemple de réalisation décrit ci-dessus, le calcul de la forme et de la position de la zone de retrait de matière 22 est réalisé préalablement à la mesure de la position des zones cibles 20. Ce mode de réalisation permet avantageusement de privilégier la mesure de zones cibles 20, situées sûr et/ou plus près de la zone de retrait de matière 22. Ainsi, on permet de réduire le nombre de zones cibles 20 et/ou on améliore la précision du retrait de matière 22.

Selon une septième variante du premier exemple de réalisation décrit ci-dessus, non représentée, le retrait de matière 22 est réalisé au niveau du nez 12 du moyeu 8.

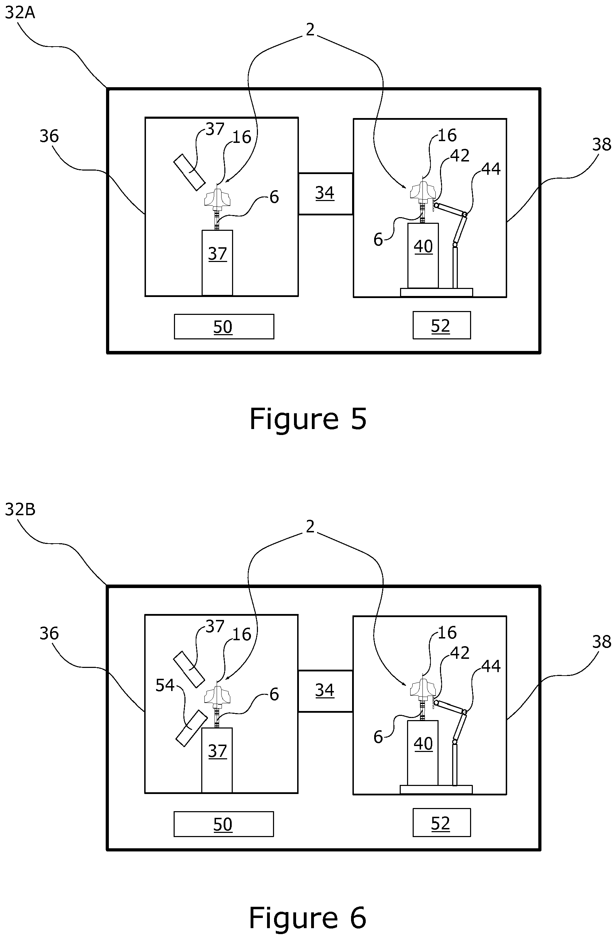

La présente invention concerne également un poste d'équilibrage 32A automatisé du balourd d'un ensemble arbre-roue 2, illustré par la figure 5, apte à mettre en œuvre un procédé d'équilibrage décrit ci-dessus. Pour cela, le poste d'équilibrage 32A comporte un convoyeur 34 permettant de déplacer un ensemble arbre-roue 2, entre une station de mesure 36 et un poste de meulage 38.

La station de mesure 36 comporte des moyens de mesure 37 du balourd de l'ensemble arbre-roue 2. La station de mesure est pilotée par une unité de commande 50, permettant de mesurer la distance entre le centre d'inertie 19 de l'ensemble arbre-roue 2 et l'axe de rotation 18 de l'arbre mécanique 6, pour obtenir une valeur du balourd dudit ensemble.

Le poste de meulage 38 comprend un support 40, apte à maintenir l'arbre mécanique 6 d'un ensemble arbre-roue 2, tout en permettant son pivotement autour de l'axe de rotation 16 dudit arbre. Le polissage est réalisé à l'aide d'un disque de meulage 42, maintenu à l'extrémité d'un bras articulé 44. Le bras articulé comporte des moyens aptes à détecter un contact entre le disque de meulage 42 et la surface de la roue à aubes 4. Autrement dit, le bras articulé 44 comporte des moyens permettant de mesurer par contact physique, la position de plusieurs zones cibles 20 présentes sur une roue à aubes, solidaire d'un arbre mécanique maintenu par le support 40. Le poste de meulage est également piloté par l'unité de commande 50 de manière à permettre le retrait d'une quantité de matière à la surface de la roue à aubes 4.

L'unité de commande 50 comporte des moyens de mémorisation d'un procédé d'équilibrage et des moyens de calculs non représentés, permettant de synchroniser la station de mesure 36, le convoyeur 34 et le poste de meulage 38, de manière à mettre en œuvre de façon automatisée un procédé d'équilibrage décrit ci-dessus. Le poste d'équilibrage comporte également une interface 52, afin de permettre à un opérateur de sélectionner et de contrôler un procédé d'équilibrage mémorisé par l'unité de commande 50.

Le poste d'équilibrage n'est pas limité au mode de réalisation décrit ci-dessus. Par exemple, selon une variante illustrée par la figure 6, le poste d'équilibrage 32B comporte des moyens de mesure sans contact 54, aptes à mesurer la position de zones cibles 20 présentes à la surface de la roue à aubes. Les moyens de mesure sans contact 54 sont pilotés par l'unité de commande 50, de sorte à réaliser ou compléter les mesures de position faites par le bras articulé 44. Ces moyens de mesure sans contact 54 peuvent être de nature optique, en utilisant par exemple un capteur de distance de type LASER, ou bien en utilisant un capteur de distance à induction électromagnétique. Bien entendu, l'invention ne se limite pas à ces seuls exemples, de sorte que l'homme du métier peut opter pour d'autres types de capteurs permettant d'effectuer ces mesures. De préférence, les moyens de mesure sans contact 54 sont présents au niveau de la station de mesure 36.

## Revendications

1. Procédé d'équilibrage du balourd d'un ensemble arbre-roue (2), comprenant une roue à aubes (4) maintenue à l'extrémité d'un arbre mécanique (6), mettant en œuvre une étape a) de mesure de la valeur du balourd de l'ensemble arbre-roue (2) par rapport à un axe longitudinal (18) de l'arbre mécanique (6), **caractérisé en ce que** les étapes suivantes sont mises en oeuvre ; b) mesure de la position d'au moins deux zones cibles (20) distinctes, présentes à la surface de la roue à aubes (4), par rapport à l'axe longitudinal (18) de l'arbre mécanique (6) ; puis c) retrait d'une quantité de matière (22) à la surface de la roue à aubes (4), afin de réduire la valeur du balourd de l'ensemble arbre-roue (2), en fonction des mesures réalisées aux étapes a) et b).

2. Procédé d'équilibrage selon la revendication précédente, **caractérisé en ce que** les zones cibles (20) sont présentes sur une ou plusieurs faces de la roue de turbine, s'étendant radialement ou sensiblement radialement par rapport à l'arbre mécanique (6).

3. Procédé d'équilibrage selon l'une des revendications précédentes, **caractérisé en ce que** les zones cibles (20) sont présentes sur une même face (10) de la roue à aubes (4).

4. Procédé d'équilibrage selon l'une des revendications précédentes, **caractérisé en ce que** les zones cibles (20) sont éloignées de l'arbre mécanique (6) selon une distance identique ou sensiblement identique.

5. Procédé d'équilibrage selon l'une des revendications précédentes, **caractérisé en ce que** les zones cibles (20) sont éloignées de l'arbre mécanique (6) d'une distance comprise entre 0,7 et 0,99 fois la valeur du plus grand rayon (R) de la roue à aubes (4).

6. Procédé d'équilibrage selon l'une des revendications précédentes, **caractérisé en ce que** les zones cibles (20) sont écartées d'une distance angulaire (α) identique ou sensiblement identique par rapport à l'arbre mécanique (6).

7. Procédé d'équilibrage selon l'une des revendications précédentes, **caractérisé en ce que** le retrait de matière (22) est réalisé dans ou à proximité d'une zone cible.

8. Procédé d'équilibrage selon l'une des revendications précédentes, **caractérisé en ce que** les positions des zones cibles (20) sont mesurées à l'aide d'un outil (42, 44) appliqué contre la surface de la roue à aubes (4).

9. Procédé d'équilibrage selon l'une des revendications précédentes, **caractérisé en ce que** les positions des zones cibles (20) sont mesurées à l'aide de moyens de mesure sans contact physique (54).

10. Procédé d'équilibrage selon l'une des revendications précédentes, **caractérisé en ce que**, préalablement à l'étape de retrait et à partir des mesures de positions des zones cibles (20), le procédé met en œuvre une étape de calcul de l'inclinaison et/ou de la position de la roue à aubes (4) par rapport à l'arbre mécanique (6), afin de définir la forme ainsi que la profondeur du retrait de matière (22) à réaliser à la surface de la roue à aubes (4).

11. Procédé d'équilibrage selon l'une des revendications précédentes, **caractérisé en ce que** le retrait de matière (22) à la surface de la roue à aubes (4) est réalisé à l'aide d'un outil de meulage (42, 44), prenant en compte la position des zones cibles (20) lors de ses déplacements à proximité de la surface de la roue à aubes (4).

12. Poste d'équilibrage automatisé (32A, 32B) du balourd d'un ensemble arbre-roue (2), apte à maintenir un arbre mécanique (6) solidaire d'une roue à aubes (4), **caractérisé en ce que** le poste d'équilibrage automatisé est configuré pour mettre en œuvre un procédé d'équilibrage automatisé selon l'une des revendications précédentes, il comprend pour cela :
- des moyens de mesure (37) de la valeur du balourd d'un ensemble arbre-roue (2), par rapport à un axe longitudinal (18) de l'arbre mécanique (6) ; et
- des moyens de mesure (42, 44, 54) de la position de plusieurs zones cibles (20) distinctes présentes à la surface de la roue à aubes (4), par rapport à l'axe longitudinal (18) de l'arbre mécanique (6) ; et
- des moyens de retrait (42, 44) d'une quantité de matière (22) à la surface de la roue à aubes (4), en fonction de la position de plusieurs zones cibles (20) à la surface de la roue à aubes (4) et de la valeur du balourd.

13. Poste d'équilibrage automatisé (32A) selon la revendication 12, **caractérisé en ce que** les moyens de mesure (42, 44) de la position de plusieurs zones cibles (20) et les moyens de retrait (42, 44) sont présents au niveau d'un même poste (38).

14. Poste d'équilibrage automatisé (32A) selon la revendication 13, **caractérisé en ce que** les moyens de mesure (42, 44) comprennent un outil (42) apte à venir en contact de la roue à aubes (4) pour mesurer la position des zones cibles (20).

15. Poste d'équilibrage automatisé (32B) selon la revendication 12, **caractérisé en ce que** les moyens de mesure (37) de la valeur du balourd et les moyens de mesure (54) de la position des zones cibles (20) sont présents au niveau d'un même poste (36).

## Patentansprüche

1. Verfahren zum Auswuchten der Unwucht einer Welle/Rad-Anordnung (2) mit einem am Ende einer mechanischen Welle (6) befestigten Schaufelrad (4),
das einen Schritt a) des Messens der Stärke der Unwucht der Welle/Rad-Anordnung (2) gegenüber einer Längsachse (18) der mechanischen Welle (6) durchführt,
**dadurch gekennzeichnet, daß** die folgenden Schritte durchgeführt werden:
b) Messen der Position mindestens zweier verschiedener, auf der Oberfläche des Schaufelrads (4) liegender Zielzonen (20) in Bezug auf die Längsachse (18) der mechanischen Welle (6), dann
c) Entfernen einer Materialmenge (22) auf der Oberfläche des Schaufelrads (4), um den Wert der Unwucht der Welle/Rad-Anordnung (2) in Abhängigkeit von den in den Schritten a) und b) gemachten Messungen zu reduzieren.

2. Verfahren zum Auswuchten gemäß dem vorangehenden Anspruch, **dadurch gekennzeichnet, daß** die Zielzonen (20) auf einer oder mehreren Seiten des Turbinenrads liegen, wobei sie sich in Bezug auf die mechanische Welle (6) radial oder im Wesentlichen radial erstrecken,

3. Verfahren zum Auswuchten gemäß einem der vorangehenden Ansprüche, **dadurch gekennzeichnet, daß** die Zielzonen (20) auf ein und derselben Seite (10) des Schaufelrads (4) liegen.

4. Verfahren zum Auswuchten gemäß einem der vorangehenden Ansprüche, **dadurch gekennzeichnet, daß** die Zielzonen (20) in einem identischen oder im Wesentlichen identischen Abstand von der mechanischen Welle (6) liegen.

5. Verfahren zum Auswuchten gemäß einem der vorangehenden Ansprüche, **dadurch gekennzeichnet, daß** die Zielzonen (20) von der mechanischen Welle (6) in einem Abstand liegen, der zwischen dem 0,7- und dem 0,99-fachen des Werts des größten Radius (R) des Schaufelrads (4) beträgt.

6. Verfahren zum Auswuchten gemäß einem der vorangehenden Ansprüche, **dadurch gekennzeichnet, daß** die Zielzonen (20) in Bezug auf die mechanische Welle (6) einen identischen oder im Wesentlichen identischen Winkelabstand (α) aufweisen.

7. Verfahren zum Auswuchten gemäß einem der vorangehenden Ansprüche, **dadurch gekennzeichnet, daß** das Entfernen von Material (22) in oder nahe einer Zielzone durchgeführt wird.

8. Verfahren zum Auswuchten gemäß einem der vorangehenden Ansprüche, **dadurch gekennzeichnet, daß** die Positionen der Zielzonen (20) mit einem an die Oberfläche des Schaufelrads (4) angedrückten Werkzeug (42, 44) gemessen werden.

9. Verfahren zum Auswuchten gemäß einem der vorangehenden Ansprüche, **dadurch gekennzeichnet, daß** die Positionen der Zielzonen (20) mit Meßmitteln (54) ohne physischen Kontakt gemessen werden.

10. Verfahren zum Auswuchten gemäß einem der vorangehenden Ansprüche, **dadurch gekennzeichnet, daß** das Verfahren vor dem Schritt des Entfernens und auf der Grundlage der Messungen der Positionen der Zielzonen (20) einen Schritt des Berechnens der Neigung und/oder der Position des Schaufelrads (4) gegenüber der mechanischen Welle (6) aufweist, um die auf der Oberfläche des Schaufelrads (4) auszuführende Form sowie die Tiefe des Entfernens von Material (22) zu definieren.

11. Verfahren zum Auswuchten gemäß einem der vorangehenden Ansprüche, **dadurch gekennzeichnet, daß** das Entfernen von Material (22) auf der Oberfläche des Schaufelrads (4) mit Hilfe eines Schleifwerkzeugs (42, 44) durchgeführt wird, wobei bei dessen Verlagerungen in der Nähe der Oberfläche des Schaufelrads die Position der Zielzonen (20) berücksichtigt wird.

12. Automatisierte Station (32A, 32B) zum Auswuchten der Unwucht einer Welle/Rad-Anordnung (2), die dazu ausgelegt ist, eine mit einem Schaufelrad (4) fest verbundene mechanische Welle (6) zu halten, **dadurch gekennzeichnet, daß** die automatisierte Station dazu ausgelegt ist, ein Verfahren zum automatisierten Auswuchten gemäß einem der vorangehenden Ansprüche durchzuführen, wobei sie dafür
- Mittel (37) zum Messen der Stärke der Unwucht der Welle/Rad-Anordnung (2) gegenüber einer Längsachse (18) der mechanischen Welle (6),
- Mittel (42, 44, 54) zum Messen der Position mehrerer verschiedener, auf der Oberfläche des Schaufelrads (4) liegender Zielzonen (20) in Bezug auf die Längsachse (18) der mechanischen Welle (6), und
- Mittel (42, 44) zum Entfernen einer Materialmenge (22) auf der Oberfläche des Schaufelrads (4) in Abhängigkeit von der Position mehrerer Zielzonen (20) auf der Oberfläche des Schaufelrads (4) und von der Stärke der Unwucht aufweist.

13. Automatisierte Station (32A) zum Auswuchten gemäß dem Anspruch 12, **dadurch gekennzeichnet, daß** die Mittel (42, 44) zum Messen der Position mehrerer Zielzonen (20) und die Mittel (42, 44) zum Entfernen auf derselben Station vorliegen.

14. Automatisierte Station (32A) zum Auswuchten gemäß Anspruch 13, **dadurch gekennzeichnet, daß** die Mittel (42, 44) zum Messen ein Werkzeug (42) aufweisen, das dazu ausgelegt ist, mit dem Schaufelrad (4) in Kontakt zu kommen, um die Position der Zielzonen (20) zu messen.

15. Automatisierte Station (32B) zum Auswuchten gemäß Anspruch 12, **dadurch gekennzeichnet, daß** die Mittel (37) zum Messen der Stärke der Unwucht und die Mittel (54) zum Messen der Position der Zielzonen (20) auf derselben Station (36) vorliegen.

## Claims

1. A method for balancing the out-of-balance of a shaft-wheel assembly (2), comprising a bladed wheel (4) held at the end of a mechanical shaft (6), implementing a step a) measuring the out-of-balance value of the shaft-wheel assembly (2) with respect to a longitudinal axis (18) of the mechanical shaft (6), **characterized in that** the following steps are implementing:
b. measuring the position of at least two distinct target areas (20), present at the surface of the bladed wheel (4), with respect to the longitudinal axis (18) of the mechanical shaft (6); then
c. removing a quantity of material (22) at the surface of the bladed wheel (4), to reduce the out-of-balance value of the shaft-wheel assembly (2), as a function of the measurements made at steps a) and b).

2. The balancing method according to the preceding claim, **characterized in that** the target areas (20) are present on one or several faces of the turbine wheel, extending radially or substantially radially with respect to the mechanical shaft (6).

3. The balancing method according to one of the preceding claims, **characterized in that** the target areas (20) are present on a same face (10) of the bladed wheel (4).

4. The balancing method according to one of the preceding claims, **characterized in that** the target areas (20) are spaced from the mechanical shaft (6) by an identical or substantially identical distance.

5. The balancing method according to one of the preceding claims, **characterized in that** the target areas (20) are spaced from the mechanical shaft (6) by a distance between 0.7 and 0.99 times the value of the largest radius (R) of the bladed wheel (4).

6. The balancing method according to one of the preceding claims, **characterized in that** the target areas (20) are spaced apart by an identical or substantially identical angular distance (α) with respect to the mechanical shaft (6).

7. The balancing method according to one of the preceding claims, **characterized in that** the material removal (22) is made in or near a target area.

8. The balancing method according to one of the preceding claims, **characterized in that** the positions of the target areas (20) are measured using a tool (42, 44) applied against the surface of the bladed wheel (4).

9. The balancing method according to one of the preceding claims, **characterized in that** the positions of the target areas (20) are measured using contactless measurement means (54).

10. The balancing method according to one of the preceding claims, **characterized in that**, previously to the removal step and from the measurements of the positions of the target areas (20), the method implements a step of calculation of the inclination and/or the position of the bladed wheel (4) with respect to the mechanical shaft (6), so as to define both the shape and the depth of the material removal (22) to be made at the surface of the bladed wheel (4).

11. The balancing method according to one of the preceding claims, **characterized in that** the material removal (22) at the surface of the bladed wheel (4) is made using a grinding tool (42, 44), taking into account the position of the target areas (20) during the moves thereof near the surface of the bladed wheel (4).

12. A station (32A, 32B) for the automated balancing of the out-of-balance of a shaft-wheel assembly (2), adapted to hold a mechanical shaft (6) integral with a bladed wheel (4), configured to implement an automated balancing method according to one of the preceding claims, comprising:
- means (37) for measuring the out-of-balance value of a shaft-wheel assembly (2) with respect to a longitudinal axis (18) of the mechanical shaft (6); and
- means (42, 44, 54) for measuring the position of several distinct target areas (20) present at the surface of the bladed wheel (4), ), with respect to the longitudinal axis (18) of the mechanical shaft (6) ; and
- means (42, 44) for removing a quantity of material (22) at the surface of the blade wheel (4), as a function of the position of several target areas (20) at the surface of the bladed wheel (4) and the out-of-balance value.

13. The automated balancing station (32A) according to claim 12, **characterized in that** the means (42, 44) for measuring the position of several target areas (20) and the removal means (42, 44) are present at a same station (38).

14. The automated balancing station (32A) according to claim 13, **characterized in that** the measurement means (42, 44) comprise a tool (42) adapted to come into contact with the bladed wheel (4) to measure the position of the target areas (20).

15. The automated balancing station (32B) according to claim 12, **characterized in that** the means (37) for measuring the out-of-balance value and the means (54) for measuring the position of the target areas (20) are present at a same station (36).
